# EUROPEAN PATENT SPECIFICATION

(11) **EP 4 086 530 B1**
(45) Date of publication and mention of the grant of the patent: **02.04.2025**
(21) Application number: 20910288.8
(22) Date of filing: 13.11.2020
(51) Int. Cl.: F24F 11/77, F25B 49/02, F24F 110/12, F24F 140/20, F25B 13/00

(54) **ROTATION SPEED CONTROL METHOD FOR AIR CONDITIONER EXTERNAL FAN**
DREHZAHLSTEUERUNGSVERFAHREN FÜR EIN EXTERNES GEBLÄSE EINER KLIMAANLAGE
PROCÉDÉ DE COMMANDE DE VITESSE DE ROTATION POUR UN VENTILATEUR EXTERNE DE CONDITIONNEUR D'AIR

(30) Priority: 02.01.2020 CN 202010001140
(43) Date of publication of application: 09.11.2022
(73) Proprietor: Qingdao Haier Air-Conditioning Electronic Co., Ltd, Qingdao, Shandong 266101 (CN); Haier Smart Home Co., Ltd., Qingdao, Shandong 266101 (CN)
(72) Inventor: SONG, Dayue, Qingdao, Shandong 266101 (CN); WANG, Haisheng, Qingdao, Shandong 266101 (CN); ZHANG, Ming, Qingdao, Shandong 266101 (CN); SUN, Mengmeng, Qingdao, Shandong 266101 (CN)
(74) Representative: Budde Schou A/S
(86) International application number: PCT/CN2020/128726
(87) International publication number: WO 2021/135680

(56) References cited:
- CN-A- 103 175 285
- CN-A- 103 175 285
- CN-A- 104 676 839
- CN-A- 104 676 839
- CN-A- 109 237 744
- CN-A- 109 237 744
- CN-A- 109 340 992
- CN-A- 109 340 992
- CN-A- 109 458 693
- CN-A- 110 207 312
- CN-A- 110 726 202
- US-A1- 2019 285 305
- US-B1- 6 397 610

## Description

### FIELD OF THE INVENTION

The present invention relates to the technical field of air conditioning; in particular, the present invention relates to a method for controlling a rotational speed of an external fan of an air conditioner.

### BACKGROUND OF THE INVENTION

As a part of an air conditioning system, an outdoor unit plays an important role in an air conditioning cycle. At present, rotational speed control of an external fan of an air conditioner is basically based on high and low system pressures. In order to achieve the rotational speed control, a DC fan is usually used as the external fan of the air conditioner. During the control process, the rotational speed of the DC fan is adjusted based on the detected system pressure, so that the rotational speed is adapted to the current system pressure or coil temperature.

However, even if the DC fan is used in the existing control methods, the rotational speed of the DC fan is divided into multiple settings for adjustment, whereas in practical applications, in order to facilitate the control, there are usually not too many speed settings provided. Therefore, due to the large rotational speed range of the fan itself of the air conditioner (usually the rotational speed range of the fan is from several hundred revolutions to several thousand revolutions), there will be a large difference in the rotational speed between the speed settings, which will also have a great influence on the high and low pressures of the air conditioning system while adjusting the wind speed, thus being not advantageous for a stable operation of the air conditioning system.

CN110207312A discloses an air conditioner control method according to the preamble of claim 1. The method comprises the steps that when the air conditioner is in a self-cleaning mode, the air conditioner is controlled to operate for refrigeration, and condensation and frosting of the air conditioner are completed; after frosting on the surface of a heat exchanger is completed, the air conditioner is controlled to operate for heating; after the surface of the heat exchanger is defrosted, an ambient temperature and a coil temperature of the heat exchanger are acquired; and according to the coil temperature and the ambient temperature, the rotation speed of a fan of the heat exchanger is adjusted.

CN103175285A discloses a control circuit of an air-conditioner outdoor draught fan. The control circuit comprises an outdoor temperature measurement detecting unit, a condenser pipe temperature detecting unit, a main control unit and a draught fan drive unit. The outdoor temperature measurement detecting unit is used for detecting outdoor environment temperature values when the air-conditioner outdoor draught fan is operated; the condenser pipe temperature detecting unit is used for detecting outdoor condenser coil pipe temperature values when the air-conditioner outdoor draught fan is operated, the main control unit is used for confirming a adjustment range of the rotating speed of the outdoor draught fan according to the outdoor environment temperature values, confirming the initial gear values in the adjustment range of the outdoor draught fan, comparing the outdoor condenser coil pipe temperature values with preset reference temperature, confirming rotating speed adjustment gear values in the adjustment range of the outdoor draught fan, and outputting corresponding rotating speed commands to the draught fan drive unit according to the initial gear values or adjustment gear values; and the draught fan drive unit drives the outdoor draught fan load according to the control commands to adjust the outdoor draught fan to operate in a corresponding speed.

CN109237744A discloses a control method for improving the stability of a heating process of an air conditioner, and relates to an air conditioner performance control method. The control method comprises the steps that when the air conditioner runs in a heating mode, the outdoor environmental temperature, the outdoor environmental humidity and the temperature of a coiler of a heat exchanger of an outdoor unit are obtained; by comparing the temperature of the coiler of the heat exchanger of the outdoor unit with a temperature interval preset value, a capillary network control valve is controlled to be started; after a pipe network branch is started, the maximum opening time of a pipe network is determined according to the obtained outdoor environmental humidity; according to the temperature of the coiler of the heat exchanger of the outdoor unit, a defrosting exit temperature preset value and the maximum opening time of the pipe network, the air conditioner is controlled to exit from the defrosting mode.

CN104676839A discloses a control method and device for an outdoor draught fan in a splitting type air conditioner. The method comprises the following steps of detecting an outdoor environment temperature and an outdoor condenser coiled pipe temperature, and obtaining an operation state of an air conditioner; when the air conditioner is at a refrigeration operation state, judging whether the outdoor environment temperature is lower than a low-temperature refrigeration function starting threshold value or not; if so, controlling the outdoor draught fan to be started and operates at a first operation gear when the outdoor condenser coiled pipe temperature is greater than or equal to the low-temperature refrigeration function starting threshold value; if judging that the outdoor environment temperature is larger than or equal to the low-temperature refrigeration function starting threshold value, determining the operation gear of the outdoor draught fan according to the outdoor environment temperature.

CN109340992A discloses an operation method for controlling the reliability of an air conditioner, a control system and the air conditioner. The operation method for controlling the reliability of the air conditioner comprises the following steps that whether a temperature sensor fails or not is judged according to a temperature signal sent by the temperature sensor, if the temperature sensor fails, the air conditioner continues to acquire real-time outdoor environment temperature, the air conditioner automatically matches each operation parameter of the system corresponding to the outdoor temperature according to the real-time outdoor temperature, and continues to operate according to each operation parameter of the system after automatic matching; and otherwise, normal mode operation is continued.

Accordingly, there is a need in the art for a new method for controlling a rotational speed of an external fan of an air conditioner to solve the above problem.

### SUMMARY OF THE INVENTION

In order to solve the above problem in the prior art, that is, to solve the problem of low adjustment accuracy of external fans of existing air conditioners, the present invention provides a method for controlling a rotational speed of an external fan of an air conditioner, in which an outdoor heat exchanger of the air conditioner is equipped with the external fan, and the method for controlling the rotational speed includes: obtaining a coil temperature of the outdoor heat exchanger after the external fan starts; comparing the coil temperature with a preset temperature threshold; and selectively controlling the rotational speed of the external fan to increase or decrease by a rotational speed adjustment amount based on a comparison result; wherein the preset temperature threshold is determined based on an outdoor ambient temperature;
wherein when the air conditioner is running in a cooling mode, there is a correspondence between the coil temperature and a saturation temperature corresponding to a high pressure of the air conditioner, the preset temperature threshold is a preset high temperature threshold, and the step of "selectively controlling the rotational speed of the external fan to increase or decrease by the rotational speed adjustment amount based on the comparison result" further comprises:
if the coil temperature is higher than the preset high temperature threshold, then controlling the rotational speed of the external fan to increase by the rotational speed adjustment amount; and
if the coil temperature is lower than the preset high temperature threshold, then controlling the rotational speed of the external fan to decrease by the rotational speed adjustment amount,
whereby either the method further comprises:
   obtaining an exhaust temperature of a compressor of the air conditioner;
   calculating an exhaust superheat degree of the compressor based on the exhaust temperature and the preset high temperature threshold;
   judging which one of the exhaust superheat degree and an exhaust superheat degree threshold is larger; and
   correcting the preset high temperature threshold based on a judgment result,
      or
   wherein when the air conditioner is running in a heating mode, there is a correspondence between the coil temperature and a saturation temperature corresponding to a low pressure of the air conditioner, the preset temperature threshold is a preset low temperature threshold, and the step of "selectively controlling the rotational speed of the external fan to increase or decrease by the rotational speed adjustment amount based on the comparison result" further comprises:
      if the coil temperature is lower than the preset low temperature threshold, then controlling the rotational speed of the external fan to increase by the rotational speed adjustment amount; and
      if the coil temperature is higher than the preset low temperature threshold, then controlling the rotational speed of the external fan to decrease by the rotational speed adjustment amount,
      whereby the method further comprises:
         obtaining a suction temperature of a compressor of the air conditioner;
         calculating a suction superheat degree of the compressor based on the suction temperature and the preset low temperature threshold;
         judging which one of the suction superheat degree and a suction superheat degree threshold is larger; and
         correcting the preset low temperature threshold based on a judgment result.

In a preferred technical solution of the method for controlling the rotational speed of the external fan of the air conditioner, after the step of "controlling the rotational speed of the external fan to increase by the rotational speed adjustment amount", the method for controlling the rotational speed further includes:
judging whether the rotational speed of the external fan is larger than its maximum rotational speed; and
if yes, controlling the external fan to run at the maximum rotational speed.

In a preferred technical solution of the method for controlling the rotational speed of the external fan of the air conditioner, after the step of "controlling the rotational speed of the external fan to decrease by the rotational speed adjustment amount", the method for controlling the rotational speed further includes:
judging whether the rotational speed of the external fan is smaller than its minimum rotational speed; and
if yes, controlling the external fan to run at the minimum rotational speed.

In a preferred technical solution of the method for controlling the rotational speed of the external fan of the air conditioner, before the external fan starts, the method for controlling the rotational speed further includes:
determining an initial rotational speed of the external fan based on the outdoor ambient temperature; and
controlling the external fan to start based on the initial rotational speed.

In a preferred technical solution of the method for controlling the rotational speed of the external fan of the air conditioner, before the external fan starts, the method for controlling the rotational speed further includes:
obtaining an indoor ambient temperature;
calculating a difference between the indoor ambient temperature and a set temperature; and
if the difference satisfies a preset condition, then controlling the external fan to start.

In a preferred technical solution of the method for controlling the rotational speed of the external fan of the air conditioner, the rotational speed adjustment amount is larger than a rotational speed error of the external fan.

It can be understood by those skilled in the art that in the preferred technical solution of the present invention, the outdoor heat exchanger of the air conditioner is equipped with the external fan, and the method for controlling the rotational speed of the external fan of the air conditioner includes: obtaining a coil temperature of the outdoor heat exchanger after the external fan starts; comparing the coil temperature with a preset temperature threshold; and selectively controlling the rotational speed of the external fan to increase or decrease by a rotational speed adjustment amount based on a comparison result; in which the preset temperature threshold is determined based on an outdoor ambient temperature.

By selectively controlling the rotational speed of the external fan to increase or decrease by the rotational speed adjustment amount based on the coil temperature of the outdoor heat exchanger and the preset temperature threshold, the control method of the present application can realize a stepless speed adjustment of the external fan, so that the rotational speed of the external fan can match the coil temperature of the outdoor heat exchanger, the influence of the rotational speed of the external fan on the air conditioning system can be reduced, and a stable operation of the air conditioning system can be ensured.

Further, by determining the preset temperature threshold based on the outdoor ambient temperature, it can be ensured that the preset temperature threshold matches the current outdoor ambient temperature, so that the air conditioner runs in an optimal state under the current outdoor ambient temperature after the rotational speed of the external fan is adjusted.

Further, by correcting the preset high temperature threshold based on the exhaust superheat degree, and then further adjusting the rotational speed of the external fan based on the corrected preset high temperature threshold, the air conditioning system can always work in a better state to prevent an excessively high or excessively low exhaust superheat degree from adversely affecting the operation of the system. Similarly, by correcting the preset low temperature threshold based on the suction superheat degree, and then further adjusting the rotational speed of the external fan based on the corrected preset low temperature threshold, the air conditioning system can always work in a better state to prevent an excessively high or excessively low suction superheat degree from adversely affecting the operation of the system.

Further, by setting the rotational speed adjustment amount to be larger than the rotational speed error of the external fan, the rotational speed adjustment of the external fan can be effectively performed at each time, thus avoiding the phenomenon of "false adjustment" of the rotational speed.

### BRIEF DESCRIPTION OF THE DRAWINGS

The method for controlling a rotational speed of an external fan of an air conditioner of the present invention will be described below with reference to the accompanying drawings. In the drawings:
FIG. 1 is a schematic system diagram of an air conditioner of the present invention;
FIG. 2 is a flowchart of a method for controlling a rotational speed of an external fan of an air conditioner according to the present invention;
FIG. 3 is a diagram showing a relationship between an initial rotational speed of the external fan and an outdoor ambient temperature during a cooling operation of the air conditioner of the present invention;
FIG. 4 is a logic diagram of the rotational speed control of the external fan during the cooling operation of the air conditioner of the present invention;
FIG. 5 is a diagram showing a relationship between the initial rotational speed of the external fan and the outdoor ambient temperature during a heating operation of the air conditioner of the present invention; and
FIG. 6 is a logic diagram of the rotational speed control of the external fan during the heating operation of the air conditioner of the present invention.

### List of reference signs:

1: compressor; 2: four-way valve; 3: outdoor heat exchanger; 4: electronic expansion valve; 5: indoor heat exchanger; 6: gas-liquid separator; 7: external fan; 8: internal fan; 9: high pressure sensor; 10: low pressure sensor; 11: high temperature sensor; 12: low temperature sensor.

### DETAILED DESCRIPTION OF THE EMBODIMENT(S) OF THE INVENTION

Preferred embodiments of the present invention will be described below with reference to the drawings. It should be understood by those skilled in the art that these embodiments are only used to explain the technical principles of the present invention, and are not intended to limit the scope of protection of the present invention, which is limited only by the subject-matter of the appended claims. For example, although the following embodiments are explained in conjunction with a single-connection machine, this is not intended to limit the scope of protection of the present invention. Those skilled in the art can apply the present invention to other application scenes without departing from the principle of the present invention. For example, the present application can also be applied to central air conditioners, multi-connections air conditioners, etc.

It should be noted that in the description of the present invention, directional or positional relationships indicated by terms such as "central", "upper", "lower", "left", "right", "vertical", "horizontal", "inner" and "outer" are based on the directional or positional relationships shown in the drawings. They are merely used for the convenience of description, and do not indicate or imply that the device or element involved must have a specific orientation, or be configured or operated in a specific orientation, and therefore they should not be construed as limiting the present invention. In addition, terms "first", "second" and "third" are used for descriptive purpose only, and should not be construed as indicating or implying relative importance.

In addition, it should also be noted that in the description of the present invention, unless otherwise clearly specified and defined, terms "install", "connect" and "connection" should be understood in a broad sense; for example, the connection may be a fixed connection, or may also be a detachable connection, or an integral connection; it may be a mechanical connection, or an electrical connection; it may be a direct connection, or an indirect connection implemented through an intermediate medium, or it may be an internal communication between two elements. For those skilled in the art, the specific meaning of the above terms in the present invention can be understood according to specific situations.

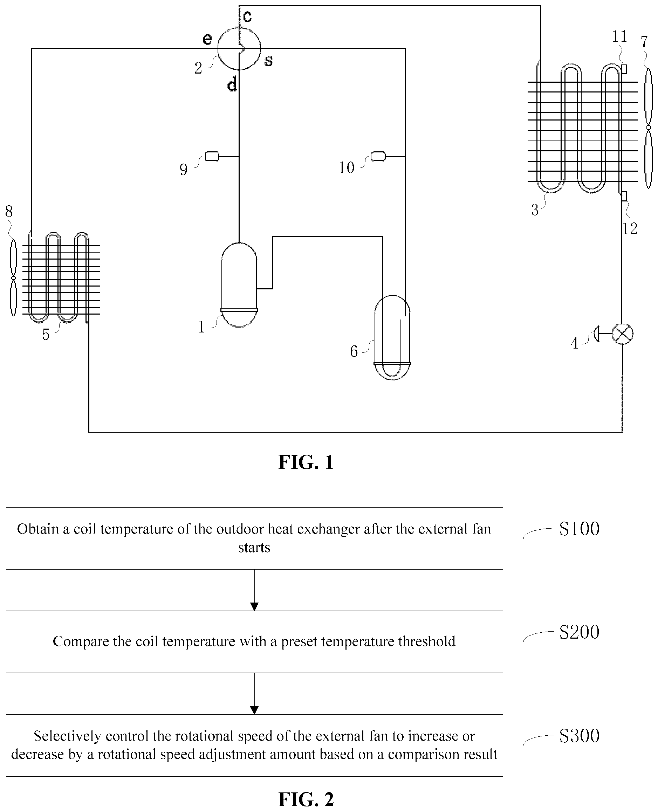

Next, referring to FIG. 1, a structure of the air conditioner of the present invention will be described. FIG. 1 is a schematic system diagram of the air conditioner of the present invention.

As shown in FIG. 1, the air conditioner of the present invention includes a compressor 1, a four-way valve 2, an outdoor heat exchanger 3, an electronic expansion valve 4, an indoor heat exchanger 5, and a gas-liquid separator 6, all of which are connected by refrigerant pipelines. The outdoor heat exchanger is equipped with an external fan 7, and the indoor heat exchanger is equipped with an internal fan 8. Preferably, in order to realize speed adjustment of the external fan 7, a DC fan is used as the external fan 7 in the present application. According to the connection state shown in FIG. 1, an exhaust port of the compressor 1 is in communication with a port d of the four-way valve 2, a port c of the four-way valve 2 is in communication with an inlet of the outdoor heat exchanger 3, and an outlet of the outdoor heat exchanger 3 is in communication with an inlet of the electronic expansion valve 4; an outlet of the electronic expansion valve 4 is in communication with an inlet of the indoor heat exchanger 5, an outlet of the indoor heat exchanger 5 is in communication with a port e of the four-way valve 2, a port s of the four-way valve 2 is in communication with a gas inlet pipe of the gas-liquid separator 6, and a gas outlet pipe of the gas-liquid separator 6 is in communication with a suction port of the compressor 1. A high pressure sensor 9 is provided on the refrigerant pipeline to which the exhaust port of the compressor 1 is connected, a low pressure sensor 10 is provided on the refrigerant pipeline to which the gas inlet pipe of the gas-liquid separator 6 is connected, and a coil of the outdoor heat exchanger 3 is also provided with a high temperature sensor 11 and a low temperature sensor 12.

With reference to FIG. 2, the method for controlling the rotational speed of the external fan of the air conditioner of the present invention will be described. FIG. 2 is a flowchart of a method for controlling the rotational speed of the external fan of the air conditioner according to the present invention.

As shown in FIG. 2, in order to solve the problem of low adjustment accuracy of the external fans of existing air conditioners, the method for controlling the rotational speed of the external fan of the air conditioner of the present invention mainly includes the following steps S100 to S300:
S100: obtaining a coil temperature of the outdoor heat exchanger after the external fan starts. For example, after the external fan starts, a coil temperature of the outdoor heat exchanger is obtained by the temperature sensors provided on the coil of the outdoor heat exchanger; referring to FIG. 1, when the air conditioner is running in the cooling mode, the collected temperature is the temperature of the high temperature sensor 11; and when the air conditioner is running in the heating mode, the collected temperature is the temperature of the low temperature sensor 12.
S200: comparing the coil temperature with a preset temperature threshold. For example, in a more preferred embodiment, the preset temperature threshold is determined based on an outdoor ambient temperature. Specifically, taking the cooling mode as an example, the preset temperature threshold may be determined as follows: when the air conditioner is running in the cooling mode, working parameters of each component of the air conditioner (such as a frequency of the compressor, an opening degree of the expansion valve, a rotational speed of the external fan, etc.) are adjusted so that the air conditioner is in a better running state. The temperature of the high temperature sensor on the coil of the outdoor heat exchanger at this time is recorded, and this temperature is used as a preset high temperature threshold at the current outdoor ambient temperature. The heating mode is similar to this, in which the temperature collected by the low temperature sensor when the air conditioner is in the better running state is used as a preset low temperature threshold at the current outdoor ambient temperature. After the coil temperature is obtained, the coil temperature is compared with the preset temperature threshold at the current outdoor ambient temperature; that is, in the cooling mode, the coil temperature value detected by the high temperature sensor is compared with the preset high temperature threshold, and in the heating mode, the coil temperature value detected by the low temperature sensor is compared with the preset low temperature threshold.
S300: selectively controlling the rotational speed of the external fan to increase or decrease by a rotational speed adjustment amount based on a comparison result. For example, the rotational speed adjustment amount may be a small rotational speed value; for example, the rotational speed adjustment amount may be any value from 5rpm to 20rpm (revolutions per minute), which is much smaller than a rotational speed difference between the various fan speed settings in the prior art. After the coil temperature is compared with the preset temperature threshold, whether the current coil temperature of the outdoor heat exchanger meets the requirements can be known, so that if the coil temperature does not meet the requirements, the temperature can be changed by adjusting the rotational speed of the external fan. For example, in the cooling mode, if the coil temperature is higher than the preset high temperature threshold, it proves that a refrigerant temperature in the outdoor heat exchanger is too high at this time, indirectly indicating that an exhaust pressure of the compressor is too high, which is not advantageous for a stable operation of the air conditioner; at this time, by controlling the rotational speed of the external fan to increase by a rotational speed adjustment amount, such as by 10rpm, the heat exchange amount of the outdoor unit is increased, the refrigerant temperature of the outdoor heat exchanger is lowered, and further the exhaust pressure of the compressor is reduced; and if the coil temperature is lower than the preset high temperature threshold, it proves that the refrigerant temperature in the outdoor heat exchanger is too low at this time, indirectly indicating that the exhaust pressure of the compressor is too low, and the compressor may have a risk of liquid hammer; at this time, by controlling the rotational speed of the external fan to decrease by a rotational speed adjustment amount, such as by 10rpm, the heat exchange amount of the outdoor unit is reduced, the refrigerant temperature of the outdoor heat exchanger is raised, and further and the exhaust pressure of the compressor is increased. The rotational speed of the external fan may be changed by adjusting a voltage or excitation current of the DC motor of the external fan. The adjustment method is now relatively mature and will not be described in detail herein.

By selectively controlling the rotational speed of the external fan to increase or decrease by a rotational speed adjustment amount based on the coil temperature of the outdoor heat exchanger and the preset temperature threshold, the control method of the present invention can realize a stepless speed adjustment of the external fan, so that the rotational speed of the external fan can match the coil temperature of the outdoor unit, the influence of the rotational speed of the external fan on the air conditioning system can be reduced, and a stable operation of the air conditioning system can be ensured. Further, by determining the preset temperature threshold based on the outdoor ambient temperature, it can be ensured that the preset temperature threshold matches the current outdoor ambient temperature, so that the air conditioner runs in an optimal state under the current outdoor ambient temperature after the rotational speed of the external fan is adjusted.

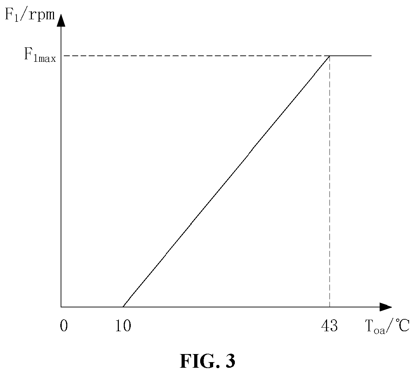

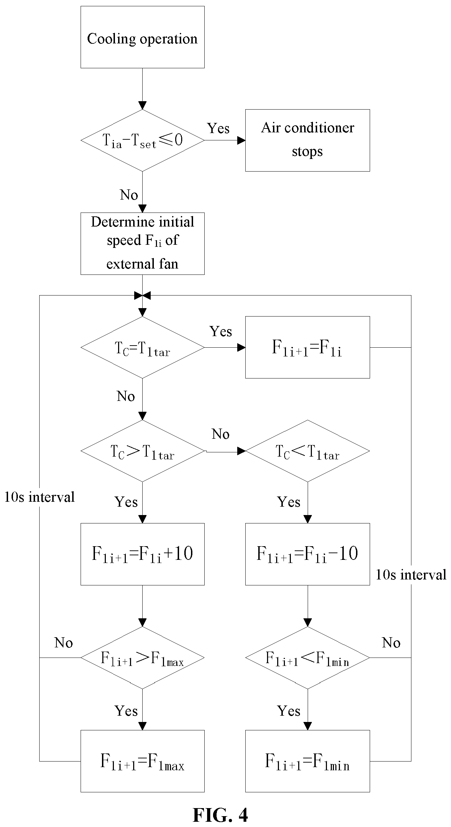

With reference to FIGS. 3 and 4, the method for controlling the rotational speed of the present invention will be described below in an example in which the air conditioner is running in the cooling mode. FIG. 3 is a diagram showing a relationship between an initial rotational speed of the external fan and the outdoor ambient temperature during a cooling operation of the air conditioner of the present invention; and FIG. 4 is a logic diagram of the rotational speed control of the external fan during the cooling operation of the air conditioner of the present invention.

As shown in FIG. 4, in a possible embodiment, before step S100, the method for controlling the rotational speed further includes: obtaining an indoor ambient temperature; calculating a difference between the indoor ambient temperature and a set temperature; and if the difference satisfies a preset condition, then controlling the external fan to start. Specifically, after the air conditioner receives a cooling operation instruction, firstly, the indoor ambient temperature is obtained by a temperature sensor provided indoors, and then which one of the indoor ambient temperature and the user's set temperature is larger is judged. If a difference between the indoor ambient temperature and the set temperature is larger than zero, it proves that the indoor ambient temperature has not reached the temperature set by the user at this time, and the room needs to be cooled. At this time, the necessary components such as the compressor, the external fan, the internal fan, and the electronic expansion valve are controlled to start, and the air conditioner starts a cooling cycle. If the difference between the indoor ambient temperature and the set temperature is smaller than or equal to zero, it proves that the indoor ambient temperature has reached the temperature set by the user at this time, and the air conditioner does not need to perform the cooling operation. At this time, the air conditioner is controlled to stop or not start.

In a possible embodiment, before step S100, the method for controlling the rotational speed further includes: determining an initial rotational speed of the external fan based on the outdoor ambient temperature; and controlling the external fan to start based on the initial rotational speed. Specifically, if the difference between the indoor ambient temperature and the set temperature is larger than zero, that is, when it is determined that the external fan needs to start, the cooling operation of the air conditioner is required. At this time, the outdoor ambient temperature is obtained by the temperature sensor provided outdoors, and then based on the obtained outdoor ambient temperature, the initial rotational speed of the external fan is determined. The initial rotational speed of the external fan may be determined by looking up a map, looking up a table or by calculating.

Referring to FIG. 3, in a possible embodiment, the initial rotational speeds of the external fan corresponding to several outdoor ambient temperatures may be determined in advance through experiments, and then based on the correspondence between the outdoor ambient temperatures and the initial rotational speeds of the external fan, a curve is fitted. When the initial rotational speed of the external fan needs to be determined, a value is taken from the curve according to the interpolation method. For example, as shown in FIG. 3, when the outdoor ambient temperature Tₒₐ≥43°C, let the initial rotational speed of the external fan F₁=F₁ₘₐₓ; when the outdoor ambient temperature Tₒₐ<10°C, let the initial rotational speed of the external fan F₁=0, so an initial rotational speed-outdoor ambient temperature curve is fitted based on the above data; and when 10°C≤Tₒₐ<43°C, the value is taken according to the interpolation method.

Of course, the above example is only used to illustrate a specific fitting method for determining the initial rotational speed of the external fan, and those skilled in the art may also use other methods to determine the initial rotational speed of the external fan. For example, in the light of the teachings of the above example, multiple sets of outdoor ambient temperatures can be used with the initial rotational speeds of the external fan for fitting, and the fitted curve may be a straight line, a curve or a step line, etc.

Referring back to FIG. 1, in a more preferred embodiment, the high temperature sensor 11 may be arranged as follows: the high temperature sensor 11 is arranged at a position where the temperature detected by the high temperature sensor 11 can have a definite correspondence with a saturation temperature corresponding to the high pressure of the air conditioner. For example, when choosing the position for arranging the high temperature sensor 11, multiple groups of experiments are conducted; firstly, the exhaust pressure of the compressor (that is, the high pressure of the air conditioner) is measured, then the saturation temperature corresponding to the exhaust pressure is determined, and finally the high temperature sensor 11 is arranged at a position having approximately the same temperature as the saturation temperature. As shown in FIG. 1, in the present application, the high temperature sensor 11 is arranged on the coil middle-and-down stream of the outdoor heat exchanger 3 in a flow direction of the refrigerant. The temperature at this position can reflect the saturation temperature corresponding to the exhaust pressure of the compressor 1 more accurately. Of course, it can be understood by those skilled in the art that the high temperature sensor 11 may also be arranged at other positions of the outdoor heat exchanger 3 under the premise that the saturation temperature corresponding to the exhaust pressure of the compressor 1 can be effectively reflected. For example, the high temperature sensor 11 may also be arranged at a position proportional to the saturation temperature corresponding to the exhaust pressure of the compressor 1.

In a possible embodiment, the preset high temperature threshold may be determined as follows: better coil temperatures of the outdoor heat exchanger during the operation of the air conditioner at different outdoor ambient temperatures are determined through experiments, and the temperatures are used as the preset high temperature thresholds at the outdoor ambient temperatures; then based on the correspondence between the preset high temperature thresholds and the outdoor ambient temperatures, a function is obtained by fitting in which an independent variable is the outdoor ambient temperature and the dependent variable is the preset high temperature threshold. When it is necessary to determine the preset high temperature threshold at the current outdoor ambient temperature, the outdoor ambient temperature is input into this function so that the preset high temperature threshold can be determined.

For example, when the outdoor ambient temperature Tₒₐ≥43°C, it is determined through experiments that a better coil temperature of the outdoor heat exchanger is T₁ₜₐᵣ=53°C. When the outdoor ambient temperature Tₒₐ≤10°C, it is determined that the better coil temperature of the outdoor heat exchanger is T₁ₜₐᵣ=15°C. Based on the two sets of data, the function T₁ₜₐᵣ=Tₒₐ+5/33×(Tₒₐ-10)+5 can be obtained by fitting. Therefore, when the outdoor ambient temperature satisfies 10°C<Tₒₐ<43°C, the outdoor ambient temperature is brought into the above-mentioned function to determine the preset high temperature threshold at the current outdoor ambient temperature.

Of course, the above example is only used to illustrate a specific fitting method for determining the preset high temperature threshold, and those skilled in the art may also use other methods to determine the preset high temperature threshold. For example, in the light of the teachings of the above example, multiple sets of outdoor ambient temperatures can be used with the corresponding coil temperatures for fitting of the function, or a curve may also be fitted based on the above data, and the preset high temperature thresholds at different outdoor ambient temperatures can be determined based on the interpolation method.

Referring to FIG. 4, in a possible embodiment, as described above, when the air conditioner is running in the cooling mode, the collected coil temperature is approximately equal to the saturation temperature corresponding to the high pressure of the compressor, and correspondingly, the preset temperature threshold is the preset high temperature threshold. In this case, step S300 further includes: if the coil temperature is higher than the preset high temperature threshold, then controlling the rotational speed of the external fan to increase by a rotational speed adjustment amount; if the coil temperature is lower than the preset high temperature threshold, then controlling the rotational speed of the external fan to decrease by a rotational speed adjustment amount; and if the coil temperature is equal to the preset high temperature threshold, then controlling the external fan to maintain the current rotational speed.

For example, when it is judged that the coil temperature is higher than the preset high temperature threshold, it proves that the refrigerant temperature in the outdoor heat exchanger is too high at this time, indirectly indicating that the exhaust pressure of the compressor is too high, which is not advantageous for a stable operation of the air conditioner. At this time, by controlling the rotational speed of the external fan to increase by a rotational speed adjustment amount, such as by 10rpm, the heat exchange amount of the outdoor unit is increased, the refrigerant temperature of the outdoor heat exchanger is lowered, and further the exhaust pressure of the compressor is reduced; and if the coil temperature is lower than the preset high temperature threshold, it proves that the refrigerant temperature in the outdoor heat exchanger is too low at this time, indirectly indicating that the exhaust pressure of the compressor is too low, and the compressor may have a risk of liquid hammer; at this time, by controlling the rotational speed of the external fan to decrease by a rotational speed adjustment amount, such as by 10rpm, the heat exchange amount of the outdoor unit is reduced, the refrigerant temperature of the outdoor heat exchanger is raised, and further and the exhaust pressure of the compressor is increased. If the coil temperature is equal to the preset high temperature threshold, it proves that the refrigerant temperature in the outdoor heat exchanger is in a better temperature interval at this time, which indirectly indicates the exhaust pressure of the compressor is also in a better state, so maintaining the current rotational speed of the external fan will be sufficient.

More preferably, the rotational speed adjustment amount is larger than a rotational speed error of the external fan. It can be understood by those skilled in the art that any DC motor has a rotational error when it rotates, and the error can be measured through experiments, or it has already been marked on a motor nameplate or in a manual when it leaves the factory. Generally, the rotational speed error is very small. For example, through actual measurement, the applicant finds that the rotational speed error of the DC motor used in the present application is ±5rpm, so the rotational speed adjustment amount of the external fan in the present application may be set to be larger than 5rpm; for example, the rotational speed adjustment amount in the present application is set to be 10rpm so that the rotational speed adjustment of the external fan can be effectively performed at each time, thus avoiding the phenomenon of "false adjustment" of the rotational speed. Of course, those skilled in the art can determine the magnitude of the rotational speed adjustment amount based on the actual external fan used.

Next, reference is made to FIG. 4, in a possible embodiment, after step S300, that is, after the rotational speed of the external fan is adjusted, the control method of the present application further includes: judging whether the rotational speed of the external fan is larger than its maximum rotational speed after the rotational speed of the external fan is controlled to increase by the rotational speed adjustment amount, and if yes, then controlling the external fan to run at the maximum rotational speed; and judging whether the rotational speed of the external fan is smaller than its minimum rotational speed after the rotational speed of the external fan is controlled to decrease by the rotational speed adjustment amount, and if yes, then controlling the external fan to run at the minimum rotational speed.

For example, those skilled in the art know that the rotational speed of the external fan has a maximum value and a minimum value. When the rotational speed of the external fan exceeds the maximum value or is lower than the minimum value, it is easy to cause failure and damage of the external fan. Therefore, when the detected coil temperature is higher than the preset high temperature threshold, after the rotational speed of the external fan is controlled to increase by the rotational speed adjustment amount, it is necessary to judge whether the rotational speed of the external fan is larger than the maximum rotational speed. If the rotational speed is larger than the maximum rotational speed, the external fan is controlled to run at the maximum rotational speed to prevent external fan failure. Similarly, when the detected coil temperature is lower than the preset high temperature threshold, after the rotational speed of the external fan is controlled to decrease by the rotational speed adjustment amount, it is necessary to judge whether the rotational speed of the external fan is smaller than the minimum rotational speed. If the rotational speed is smaller than the minimum rotational speed, the external fan is controlled to run at the minimum rotational speed to prevent external fan failure. Although the specific values of the maximum and minimum rotational speeds of the external fan are not described in the present application, this does not mean that the present application cannot be implemented. On the contrary, those skilled in the art know that the maximum and minimum rotational speeds of the DC motor are different for different models of fans. For example, the minimum rotational speed of the DC motor may be zero or any value larger than zero.

In a possible embodiment, the method for controlling the rotational speed further includes: obtaining an exhaust temperature of the compressor; calculating an exhaust superheat degree of the compressor based on the exhaust temperature and the preset high temperature threshold; judging which one of the exhaust superheat degree and an exhaust superheat degree threshold is larger; correcting the preset high temperature threshold based on a judgment result. Specifically, when the air conditioner is running normally, its exhaust superheat degree should not be too high or too low. If the exhaust superheat degree is too high, it will cause the refrigerant to overheat and damage the refrigerant oil of the compressor, which may cause deterioration of the refrigerant oil of the compressor and affect the normal running of the system. If the exhaust superheat degree is too low, compression of the refrigerant will be insufficient, and there will be the possibility of liquid compression, which is detrimental to the system and affects the life of the system. Therefore, in the process of adjusting the rotational speed of the external fan, the preset high temperature threshold can also be further corrected, and the rotational speed of the external fan can be adjusted through the corrected preset high temperature threshold, so that the air conditioning system can always work in a better state to prevent excessively high or low exhaust superheat degree from adversely affecting system operation.

For example, the exhaust temperature of the compressor can be detected by the temperature sensor provided on the refrigerant pipeline to which the exhaust port of the compressor is connected. From the correspondence between the data collected by the above high temperature sensor and the saturation temperature corresponding to the exhaust pressure, it can be known that the preset high temperature threshold can indirectly determine the saturation temperature corresponding to the exhaust pressure of the compressor in the ideal running state at the current outdoor ambient temperature. At this time, the exhaust superheat degree = the exhaust temperature minus the preset high temperature threshold. After the exhaust superheat degree is calculated, the exhaust superheat degree is compared with a preset exhaust superheat degree threshold. If the exhaust superheat degree is greater than the exhaust superheat degree threshold, it proves that either the exhaust temperature of the compressor is too high, or the saturation temperature corresponding to the exhaust pressure of the compressor is too low (that is, the preset high temperature threshold is too low); at this time, the preset high temperature threshold T₁ₜₐᵣ can be positively corrected; for example, let T₁ₜₐᵣ'=1.02×T₁ₜₐᵣ, where Tₗₜₐᵣ is the preset high temperature threshold at the current outdoor ambient temperature, and T₁ₜₐᵣ' is the corrected preset high temperature threshold. Similarly, if the exhaust superheat degree is less than the exhaust superheat degree threshold, it proves that either the exhaust temperature of the compressor is too low, or the saturation temperature corresponding to the exhaust pressure of the compressor is too high (that is, the preset high temperature threshold is too high); at this time, the preset high temperature threshold Tₗₜₐᵣ can be negatively corrected; for example, let T₁ₜₐᵣ'=0.98×T₁ₜₐᵣ, where Tₗₜₐᵣ is the preset high temperature threshold at the current outdoor ambient temperature, and T₁ₜₐᵣ' is the corrected preset high temperature threshold. Of course, the coefficients 1.02 and 0.98 are not unique, and those skilled in the art can make flexible adjustments based on actual application scenes. Such adjustments do not deviate from the principle of the present application.

Hereinafter, referring to FIG. 4, a possible control process of the operation of the air conditioner in the cooling mode will be described.

As shown in FIG. 4, after the air conditioner is turned on and runs in the cooling mode, the indoor ambient temperature Tᵢₐ is obtained first and compared with a temperature Tₛₑₜ set by the user→when Tᵢₐ-Tₛₑₜ≤0 holds, it proves that the current indoor ambient temperature has already reached the set temperature, and the air conditioner is controlled to stop; and when Tᵢₐ-Tₛₑₜ≤0 does not hold, it proves that the air conditioner needs to run in the cooling mode to cool the room; at this time, the initial rotational speed F₁ᵢ of the external fan and the preset high temperature threshold Tₗₜₐᵣ are determined based on the current outdoor ambient temperature, and based on the initial rotational speed F₁ᵢ, the external fan of the air conditioner is controlled to start to run-after the external fan starts to run, the temperature T_{c} of the high temperature sensor is detected and compared with the preset high temperature threshold T₁ₜₐᵣ→When T_{c}=T₁ₜₐᵣ holds, the external fan is controlled to maintain the current rotational speed F₁ᵢ; when T_{c}=T₁ₜₐᵣ does not hold, which one of the two is larger is further judged→(1) when T_{c}>T₁ₜₐᵣ, the rotational speed of the external fan is controlled to increase by 10rpm, that is, F₁ᵢ₊₁=F₁ᵢ+10, and it is judged whether F₁ᵢ₊₁>F₁ₘₐₓ holds→ if it holds, the external fan is controlled to run at F₁ₘₐₓ, and then after an interval of 10s, the relationship between T_{c} and T₁ₜₐᵣ is re-judged; if it does not hold, the external fan is controlled to run at F₁ᵢ₊₁, and then after an interval of 10s, the relationship between T_{c} and T₁ₜₐᵣ is re-judged→(2) when T_{c}<T₁ₜₐᵣ, the rotational speed of the external fan is controlled to decrease by 10rpm, that is, F₁ᵢ₊₁=F₁ᵢ-10, and it is judged whether F₁ᵢ₊₁<F₁ₘᵢₙ holds→if it holds, the external fan is controlled to run at F₁ₘᵢₙ, and then after an interval of 10s, the relationship between T_{c} and T₁ₜₐᵣ is re-judged; and if it does not hold, the external fan is controlled to run at F₁ᵢ₊₁, and then after an interval of 10s, the relationship between T_{c} and T₁ₜₐᵣ is re-judged.

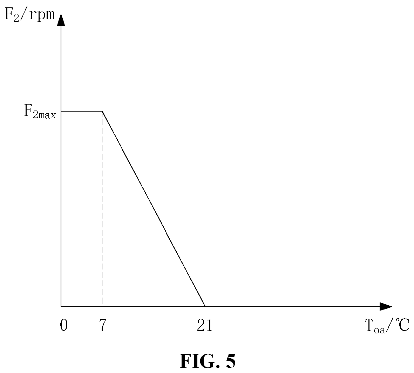

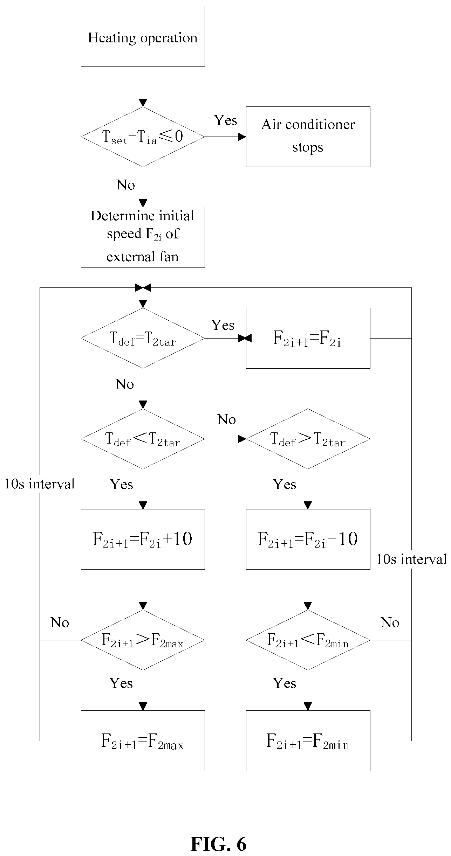

With reference to FIGS. 5 and 6, the method for controlling the rotational speed of the present invention will be described below in an example in which the air conditioner is running in the heating mode. FIG. 5 is a diagram showing a relationship between the initial rotational speed of the external fan and the outdoor ambient temperature during a heating operation of the air conditioner of the present invention; and FIG. 6 is a logic diagram of the rotational speed control of the external fan during the heating operation of the air conditioner of the present invention.

As shown in FIG. 6, in a possible embodiment, before step S100, the method for controlling the rotational speed further includes: obtaining an indoor ambient temperature; calculating a difference between the indoor ambient temperature and a set temperature; and if the difference satisfies a preset condition, then controlling the external fan to start. Specifically, after the air conditioner receives a heating operation instruction, firstly, the indoor ambient temperature is obtained by a temperature sensor provided indoors, and then which one of the user's set temperature and the indoor ambient temperature is larger is judged. If a difference between the set temperature and the indoor ambient temperature is larger than zero, it proves that the indoor ambient temperature has not reached the temperature set by the user at this time, and the room needs to be heated. At this time, the necessary components such as the compressor, the external fan, the internal fan, and the electronic expansion valve are controlled to start, and the air conditioner starts a heating cycle. If the difference between the set temperature and the indoor ambient temperature is smaller than or equal to zero, it proves that the indoor ambient temperature has reached the temperature set by the user at this time, and the air conditioner does not need to perform the heating operation. At this time, the air conditioner is controlled to stop or not start.

In a possible embodiment, before step S100, the method for controlling the rotational speed further includes: determining an initial rotational speed of the external fan based on the outdoor ambient temperature; and controlling the external fan to start based on the initial rotational speed. Specifically, if the difference between the set temperature and the indoor ambient temperature is larger than zero, that is, when it is determined that the external fan needs to start, the heating operation of the air conditioner is required. At this time, the outdoor ambient temperature is obtained by the temperature sensor provided outdoors, and then based on the obtained outdoor ambient temperature, the initial rotational speed of the external fan is determined. The initial rotational speed of the external fan may be determined by looking up a map, looking up a table or by calculating.

Referring to FIG. 5, in a possible embodiment, the initial rotational speeds of the external fan corresponding to several outdoor ambient temperatures may be determined in advance through experiments, and then based on the correspondence between the outdoor ambient temperatures and the initial rotational speeds of the external fan, a curve is fitted. When the initial rotational speed of the external fan needs to be determined, a value is taken from the curve according to the interpolation method. For example, as shown in FIG. 5, when the outdoor ambient temperature Tₒₐ≤7°C, let the initial rotational speed of the external fan F₂=F₂ₘₐₓ; when the outdoor ambient temperature Tₒₐ≥21°C, let the initial rotational speed of the external fan F₂=0, so an initial rotational speed-outdoor ambient temperature curve is fitted based on the above data; and when 7°C <Tₒₐ<21°C, the value is taken according to the interpolation method.

Of course, the above example is only used to illustrate a specific fitting method for determining the initial rotational speed of the external fan, and those skilled in the art may also use other methods to determine the initial rotational speed of the external fan. For example, in the light of the teachings of the above example, multiple sets of outdoor ambient temperatures can be used with the initial rotational speeds of the external fan for fitting, and the fitted curve may be a straight line, a curve or a step line, etc.

Referring back to FIG. 1, in a more preferred embodiment, the low temperature sensor 12 may be arranged as follows: the low temperature sensor 12 is arranged at a position where the temperature detected by the low temperature sensor 12 can have a definite correspondence with a saturation temperature corresponding to the low pressure of the air conditioner. For example, when choosing the position for arranging the low temperature sensor 12, multiple groups of experiments are conducted; firstly, the suction pressure of the compressor (that is, the low pressure of the air conditioner) is measured, then the saturation temperature corresponding to the suction pressure is determined, and finally the low temperature sensor 12 is arranged at a position having approximately the same temperature as the saturation temperature. As shown in FIG. 1, in the present application, the low temperature sensor 12 is arranged on the coil at the inlet of the outdoor heat exchanger 3 in a flow direction of the refrigerant. The temperature at this position can reflect the saturation temperature corresponding to the suction pressure of the compressor 1 more accurately. Of course, it can be understood by those skilled in the art that the low temperature sensor 12 may also be arranged at other positions of the outdoor heat exchanger 3 under the premise that the saturation temperature corresponding to the suction pressure of the compressor 1 can be effectively reflected. For example, the low temperature sensor 12 may also be arranged at a position proportional to the saturation temperature corresponding to the suction pressure of the compressor 1.

In a possible embodiment, the preset low temperature threshold may be determined as follows: better coil temperatures of the outdoor heat exchanger during the operation of the air conditioner at different outdoor ambient temperatures are determined through experiments, and the temperatures are used as the preset low temperature thresholds at the outdoor ambient temperatures; then based on the correspondence between the preset low temperature thresholds and the outdoor ambient temperatures, a function is obtained by fitting in which an independent variable is the outdoor ambient temperature and the dependent variable is the preset low temperature threshold. When it is necessary to determine the preset low temperature threshold at the current outdoor ambient temperature, the outdoor ambient temperature is input into this function so that the preset low temperature threshold can be determined.

For example, when the outdoor ambient temperature Tₒₐ≥21°C, it is determined through experiments that a better coil temperature of the outdoor heat exchanger is T₂ₜₐᵣ=18°C. When the outdoor ambient temperature Tₒₐ≤7°C, it is determined that the better coil temperature of the outdoor heat exchanger is T₂ₜₐᵣ=1°C. According to the experiments, an evaporation temperature of the outdoor unit is relatively high at this time, the machine will not frost, and the heating effect is better. Based on the two sets of data, the function T₂ₜₐᵣ=Tₒₐ-3+3/14 × (Tₒₐ-21) can be obtained by fitting. Therefore, when the outdoor ambient temperature satisfies 7°C<Tₒₐ<21°C, the outdoor ambient temperature is brought into the above-mentioned function to determine the preset low temperature threshold at the current outdoor ambient temperature.

Of course, the above example is only used to illustrate a specific fitting method for determining the preset low temperature threshold, and those skilled in the art may also use other methods to determine the preset low temperature threshold. For example, in the light of the teachings of the above example, multiple sets of outdoor ambient temperatures can be used with the corresponding coil temperatures for fitting of the function, or a curve may also be fitted based on the above data, and the preset low temperature thresholds at different outdoor ambient temperatures can be determined based on the interpolation method.

Referring to FIG. 6, in a possible example, as described above, when the air conditioner is running in the heating mode, the collected coil temperature is approximately equal to the saturation temperature corresponding to the low pressure of the compressor, and correspondingly, the preset temperature threshold is the preset low temperature threshold. In this case, step S300 further includes: if the coil temperature is lower than the preset low temperature threshold, then controlling the rotational speed of the external fan to increase by a rotational speed adjustment amount; if the coil temperature is higher than the preset low temperature threshold, then controlling the rotational speed of the external fan to decrease by a rotational speed adjustment amount; and if the coil temperature is equal to the preset low temperature threshold, then controlling the external fan to maintain the current rotational speed.

For example, when it is judged that the coil temperature is lower than the preset low temperature threshold, it proves that the refrigerant temperature in the outdoor heat exchanger is too low at this time, indirectly indicating that the suction pressure of the compressor is too low, so the compressor has a risk of liquid hammer. At this time, by controlling the rotational speed of the external fan to increase by a rotational speed adjustment amount, such as by 10rpm, the heat exchange amount of the outdoor unit is increased, the refrigerant temperature of the outdoor heat exchanger is raised, and further the suction pressure of the compressor is increased; and if the coil temperature is higher than the preset low temperature threshold, it proves that the refrigerant temperature in the outdoor heat exchanger is too high at this time, indirectly indicating that the suction pressure of the compressor is too high, which is not advantageous for a stable operation of the air conditioner; at this time, by controlling the rotational speed of the external fan to decrease by a rotational speed adjustment amount, such as by 10rpm, the heat exchange amount of the outdoor unit is reduced, the refrigerant temperature of the outdoor heat exchanger is lowered, and further the suction pressure of the compressor is reduced. If the coil temperature is equal to the preset low temperature threshold, it proves that the refrigerant temperature in the outdoor heat exchanger is in a better temperature interval at this time, which indirectly indicates the suction pressure of the compressor is also in a better state, so maintaining the current rotational speed of the external fan will be sufficient.

More preferably, the rotational speed adjustment amount is larger than the rotational speed error of the external fan. It can be understood by those skilled in the art that any DC motor has a rotational error when it rotates, and the error can be measured through experiments, or it has already been marked on a motor nameplate or in a manual when it leaves the factory. Generally, the rotational speed error is very small. For example, through actual measurement, the applicant finds that the rotational speed error of the DC motor used in the present application is ±5rpm, so the rotational speed adjustment amount of the external fan in the present application may be set to be larger than 5rpm; for example, the rotational speed adjustment amount in the present application is set to be 10rpm so that the rotational speed adjustment of the external fan can be effectively performed at each time, thus avoiding the phenomenon of "false adjustment" of the rotational speed. Of course, those skilled in the art can determine the magnitude of the rotational speed adjustment amount based on the actual external fan used.

Next, reference is made to FIG. 6, in a possible embodiment, after step S300, that is, after the rotational speed of the external fan is adjusted, the control method of the present application further includes: judging whether the rotational speed of the external fan is larger than its maximum rotational speed after the rotational speed of the external fan is controlled to increase by the rotational speed adjustment amount, and if yes, then controlling the external fan to run at the maximum rotational speed; and judging whether the rotational speed of the external fan is smaller than its minimum rotational speed after the rotational speed of the external fan is controlled to decrease by the rotational speed adjustment amount, and if yes, then controlling the external fan to run at the minimum rotational speed.

For example, those skilled in the art know that the rotational speed of the external fan has a maximum value and a minimum value. When the rotational speed of the external fan exceeds the maximum value or is lower than the minimum value, it is easy to cause failure and damage of the external fan. Therefore, when the detected coil temperature is lower than the preset low temperature threshold, after the rotational speed of the external fan is controlled to increase by the rotational speed adjustment amount, it is necessary to judge whether the rotational speed of the external fan is larger than the maximum rotational speed. If the rotational speed is larger than the maximum rotational speed, the external fan is controlled to run at the maximum rotational speed to prevent external fan failure. Similarly, when the detected temperature is higher than the preset low temperature threshold, after the rotational speed of the external fan is controlled to decrease by the rotational speed adjustment amount, it is necessary to judge whether the rotational speed of the external fan is smaller than the minimum rotational speed. If the rotational speed is smaller than the minimum rotational speed, the external fan is controlled to run at the minimum rotational speed to prevent external fan failure. Although the specific values of the maximum and minimum rotational speeds of the external fan are not described in the present application, this does not mean that the present application cannot be implemented. On the contrary, those skilled in the art know that the maximum and minimum rotational speeds of the DC motor are different for different models of fans. For example, the minimum rotational speed of the DC motor may be zero or any value larger than zero.

In a possible embodiment, the method for controlling the rotational speed further includes: obtaining a suction temperature of the compressor; calculating a suction superheat degree of the compressor based on the suction temperature and the preset low temperature threshold; judging which one of the suction superheat degree and a suction superheat degree threshold is larger; correcting the preset low temperature threshold based on a judgment result. Specifically, when the air conditioner is running normally, its suction superheat degree should not be too high or too low. If the suction superheat degree is too high, it will cause the refrigerant to overheat and damage the refrigerant oil of the compressor, which may cause deterioration of the refrigerant oil of the compressor and affect the normal running of the system. If the suction superheat degree is too low, compression of the refrigerant will be insufficient, and there will be the possibility of liquid compression, which is detrimental to the system and affects the life of the system. Therefore, in the process of adjusting the rotational speed of the external fan, the preset low temperature threshold can also be further corrected, and the rotational speed of the external fan can be adjusted through the corrected preset low temperature threshold, so that the air conditioning system can always work in a better state to prevent excessively high or low suction superheat degree from adversely affecting system operation.

For example, the suction temperature of the compressor can be detected by the temperature sensor provided on the refrigerant pipeline to which the suction port of the compressor is connected. From the correspondence between the data collected by the above low temperature sensor and the saturation temperature corresponding to the suction pressure, it can be known that the preset low temperature threshold can indirectly determine the saturation temperature corresponding to the suction pressure of the compressor in the ideal running state at the current outdoor ambient temperature. At this time, the suction superheat degree = the suction temperature minus the preset low temperature threshold. After the suction superheat degree is calculated, the suction superheat degree is compared with a preset suction superheat degree threshold. If the suction superheat degree is greater than the suction superheat degree threshold, it proves that either the suction temperature of the compressor is too high, or the saturation temperature corresponding to the suction pressure of the compressor is too low (that is, the preset low temperature threshold is too low); at this time, the preset low temperature threshold T₂ₜₐᵣ can be positively corrected; for example, let T₂ₜₐᵣ' =1.02×T₂ₜₐᵣ, where T₂ₜₐᵣ is the preset low temperature threshold at the current outdoor ambient temperature, and T₂ₜₐᵣ' is the corrected preset low temperature threshold. Similarly, if the suction superheat degree is less than the suction superheat degree threshold, it proves that either the suction temperature of the compressor is too low, or the saturation temperature corresponding to the suction pressure of the compressor is too high (that is, the preset low temperature threshold is too high); at this time, the preset low temperature threshold T₂ₜₐᵣ can be negatively corrected; for example, let T₂ₜₐᵣ'=0.98×T₂ₜₐᵣ, where T₂ₜₐᵣ is the preset low temperature threshold at the current outdoor ambient temperature, and T₂ₜₐᵣ' is the corrected preset low temperature threshold. Of course, the coefficients 1.02 and 0.98 are not unique, and those skilled in the art can make flexible adjustments based on actual application scenes. Such adjustments do not deviate from the principle of the present application.

Hereinafter, referring to FIG. 6, a possible control process of the operation of the air conditioner in the heating mode will be described.

As shown in FIG. 6, after the air conditioner is turned on and runs in the heating mode, the indoor ambient temperature Tᵢₐ is obtained first and compared with a temperature Tₛₑₜ set by the user-when Tₛₑₜ-Tᵢₐ≤0 holds, it proves that the current indoor ambient temperature has already reached the set temperature, and the air conditioner is controlled to stop; and when Tₛₑₜ-Tᵢₐ≤0 does not hold, it proves that the air conditioner needs to run in the heating mode to heat the room; at this time, the initial rotational speed F₂ᵢ of the external fan and the preset low temperature threshold T₂ₜₐᵣ are determined based on the current outdoor ambient temperature, and based on the initial rotational speed F₂ᵢ, the external fan of the air conditioner is controlled to start to run-after the external fan starts to run, the temperature T_{def} of the low temperature sensor is detected and compared with the preset low temperature threshold T₂ₜₐᵣ→When T_{def}=T₂ₜₐᵣ holds, the external fan is controlled to maintain the current rotational speed F₂ᵢ; when T_{def}=T₂ₜₐᵣ does not hold, which one of the two is larger is further judged→(1) when T_{det}<T₂ₜₐᵣ, the rotational speed of the external fan is controlled to increase by 10rpm, that is, F₂ᵢ₊₁=F₂ᵢ+10, and it is judged whether F₂ᵢ₊₁>F₂ₘₐₓ holds→ if it holds, the external fan is controlled to run at F₂ₘₐₓ, and then after an interval of 10s, the relationship between T_{def} and T₂ₜₐᵣ is re-judged; if it does not hold, the external fan is controlled to run at F₂ᵢ₊₁, and then after an interval of 10s, the relationship between T_{def} and T₂ₜₐᵣ is re-judged-(2) when T_{def}>T₂ₜₐᵣ, the rotational speed of the external fan is controlled to decrease by 10rpm, that is, F₂ᵢ₊₁=F₂ᵢ-10, and it is judged whether F₂ᵢ₊₁<F₂ₘᵢₙ holds→if it holds, the external fan is controlled to run at F₂ₘᵢₙ, and then after an interval of 10s, the relationship between T_{def} and T₂ₜₐᵣ is re-judged; and if it does not hold, the external fan is controlled to run at F₂ᵢ₊₁, and then after an interval of 10s, the relationship between T_{def} and Tₛₜₐᵣ is re-judged.

In summary, by selectively controlling the rotational speed of the external fan to increase or decrease by the rotational speed adjustment amount based on the coil temperature and the preset temperature threshold, the control method of the present application can realize a stepless speed adjustment of the external fan, so that the rotational speed of the external fan can match the temperature of the outdoor heat exchanger and indirectly match the system pressure, and the influence of the rotational speed of the external fan on the air conditioning system can be reduced. In the process of adjusting the rotational speed, due to the small value of rotational speed adjustment amount and high adjustment accuracy, the high/low temperature of the outdoor heat exchanger will basically not fluctuate too much compared with the current external fan speed settings, which improves the reliability and stability of system operation.

It should be noted that although the specific steps of the method of the present invention are described in detail above, the method ma be altered without departing from the scope of the invention as defined in the appended claims.

## Claims

1. A method for controlling a rotational speed of an external fan (7) of an air conditioner, an outdoor heat exchanger (3) of the air conditioner being equipped with the external fan (7), and the method for controlling the rotational speed comprising:
obtaining (S100) a coil temperature of the outdoor heat exchanger (3) after the external fan (7) starts;
comparing (S200) the coil temperature with a preset temperature threshold; and
selectively controlling (S300) the rotational speed of the external fan (7) to increase or decrease by a rotational speed adjustment amount based on a comparison result;
wherein the preset temperature threshold is determined based on an outdoor ambient temperature,
**characterized in that** when the air conditioner is running in a cooling mode, there is a correspondence between the coil temperature and a saturation temperature corresponding to a high pressure of the air conditioner, the preset temperature threshold is a preset high temperature threshold, and the step of "selectively controlling the rotational speed of the external fan (7) to increase or decrease by the rotational speed adjustment amount based on the comparison result" further comprises:
if the coil temperature is higher than the preset high temperature threshold, then controlling the rotational speed of the external fan (7) to increase by the rotational speed adjustment amount; and
if the coil temperature is lower than the preset high temperature threshold, then controlling the rotational speed of the external fan (7) to decrease by the rotational speed adjustment amount,
whereby either method further comprises:
obtaining an exhaust temperature of a compressor of the air conditioner;
calculating an exhaust superheat degree of the compressor based on the exhaust temperature and the preset high temperature threshold;
judging which one of the exhaust superheat degree and an exhaust superheat degree threshold is larger; and
correcting the preset high temperature threshold based on a judgment result,
or,
wherein when the air conditioner is running in a heating mode, there is a correspondence between the coil temperature and a saturation temperature corresponding to a low pressure of the air conditioner, the preset temperature threshold is a preset low temperature threshold, and the step of "selectively controlling the rotational speed of the external fan (7) to increase or decrease by the rotational speed adjustment amount based on the comparison result" further comprises:
if the coil temperature is lower than the preset low temperature threshold, then controlling the rotational speed of the external fan (7) to increase by the rotational speed adjustment amount; and
if the coil temperature is higher than the preset low temperature threshold, then controlling the rotational speed of the external fan (7) to decrease by the rotational speed adjustment amount,
whereby the method further comprises:
obtaining a suction temperature of a compressor of the air conditioner;
calculating a suction superheat degree of the compressor based on the suction temperature and the preset low temperature threshold;
judging which one of the suction superheat degree and a suction superheat degree threshold is larger; and
correcting the preset low temperature threshold based on a judgment result.

2. The method for controlling the rotational speed of the external fan (7) of the air conditioner according to claim 1, **characterized in that** after the step of "controlling the rotational speed of the external fan (7) to increase by the rotational speed adjustment amount", the method for controlling the rotational speed further comprises:
judging whether the rotational speed of the external fan (7) is larger than its maximum rotational speed; and
if yes, controlling the external fan (7) to run at the maximum rotational speed.

3. The method for controlling the rotational speed of the external fan (7) of the air conditioner according to claim 1, **characterized in that** after the step of "controlling the rotational speed of the external fan (7) to decrease by the rotational speed adjustment amount", the method for controlling the rotational speed further comprises:
judging whether the rotational speed of the external fan (7) is smaller than its minimum rotational speed; and
if yes, controlling the external fan (7) to run at the minimum rotational speed.

4. The method for controlling the rotational speed of the external fan (7) of the air conditioner according to claim 1, **characterized in that** before the external fan (7) starts, the method for controlling the rotational speed further comprises:
determining an initial rotational speed of the external fan (7) based on the outdoor ambient temperature; and
controlling the external fan (7) to start based on the initial rotational speed.

5. The method for controlling the rotational speed of the external fan (7) of the air conditioner according to claim 1, **characterized in that** before the external fan (7) starts, the method for controlling the rotational speed further comprises:
obtaining an indoor ambient temperature;
calculating a difference between the indoor ambient temperature and a set temperature; and
if the difference satisfies a preset condition, then controlling the external fan (7) to start.

6. The method for controlling the rotational speed of the external fan (7) of the air conditioner according to claim 1, **characterized in that** the rotational speed adjustment amount is larger than a rotational speed error of the external fan (7).

## Patentansprüche

1. Eine Methode zur Steuerung der Drehzahl eines Außenlüfter (7) eines Klimageräts, wobei der Außenlüfter (7) an einem Außentauscher (3) des Klimageräts montiert ist, und die Methode zur Drehzahlsteuerung umfasst:
a) das Erhalten (S100) derwicklungstemperatur des Außentauschers (3) nach dem Start des Außenlüfters (7);
b) das Vergleichen (S200) derwicklungstemperatur mit einer vorgegebenen Temperaturgrenze; und
c) die selektive Steuerung (S300) der Drehzahl des Außenlüfters (7), um diese um einen vorgegebenen Drehzahlkorrekturmengenzu erhöhen oder zu verringern, abhängig vom Vergleichsergebnis;
wobei die vorgegebene Temperaturgrenze nach dem außentemperatur bestimmt wird.
**gekennzeichnet dadurch, dass**:
wenn das Klimagerät im Kühlmodus betrieben wird, eine Korrespondenz zwischen derwicklungstemperatur und der Sättigungstemperatur, die dem Hochdruck des Klimageräts entspricht, besteht, die vorgegebene Temperaturgrenze eine vorgegebene hohe Temperaturgrenze ist, und der Schritt "die selektive Steuerung der Drehzahl des Außenlüfters (7) um den vorgegebenen Drehzahlkorrekturmengenzu erhöhen oder zu verringern, abhängig vom Vergleichsergebnis" weiterhin umfasst:
Wenn diewicklungstemperatur höher als die vorgegebene hohe Temperaturgrenze ist, wird die Drehzahl des Außenlüfters (7) um den vorgegebenen Drehzahlkorrekturmengenzu erhöhen gesteuert; und
Wenn diewicklungstemperatur niedriger als die vorgegebene hohe Temperaturgrenze ist, wird die Drehzahl des Außenlüfters (7) um den vorgegebenen Drehzahlkorrekturmengenzu verringern gesteuert.
Darüber hinaus umfasst jede Methode:
das Erhalten der Abgastemperatur eines Kompresseurs des Klimageräts;
das Berechnen des Abgasüberhitzegrades des Kompresseurs basierend auf der Abgastemperatur und der vorgegebenen hohen Temperaturgrenze;
das Feststellen, welcher der beiden Werte (Abgasüberhitzegrade oder vorgegebener Abgasüberhitzegradeschwellwert) größer ist; und
die Korrektur der vorgegebenen hohen Temperaturgrenze basierend auf dem Ergebnis der Feststellung.
Oder:
wenn das Klimagerät im Heizmodus betrieben wird, besteht eine Korrespondenz zwischen derwicklungstemperatur und der Sättigungstemperatur, die dem Niedrdruck des Klimageräts entspricht, die vorgegebene Temperaturgrenze eine vorgegebene niedrige Temperaturgrenze ist, und der Schritt "die selektive Steuerung der Drehzahl des Außenlüfters (7) um den vorgegebenen Drehzahlkorrekturmengenzu erhöhen oder zu verringern, abhängig vom Vergleichsergebnis" weiterhin umfasst:
Wenn diewicklungstemperatur niedriger als die vorgegebene niedrige Temperaturgrenze ist, wird die Drehzahl des Außenlüfters (7) um den vorgegebenen Drehzahlkorrekturmengenzu erhöhen gesteuert; und
Wenn diewicklungstemperatur höher als die vorgegebene niedrige Temperaturgrenze ist, wird die Drehzahl des Außenlüfters (7) um den vorgegebenen Drehzahlkorrekturmengenzu verringern gesteuert.
Darüber hinaus umfasst die Methode:
das Erhalten der Saugtemperatur eines Kompresseurs des Klimageräts;
das Berechnen des Saugüberhitzegrades des Kompresseurs basierend auf der Saugtemperatur und der vorgegebenen niedrigen Temperaturgrenze;
das Feststellen, welcher der beiden Werte (Saugüberhitzegrade oder vorgegebener Saugüberhitzegradeschwellwert) größer ist; und
die Korrektur der vorgegebenen niedrigen Temperaturgrenze basierend auf dem Ergebnis der Feststellung.

2. Die Methode zur Steuerung der Drehzahl des Außenlüfters (7) des Klimageräts nach Anspruch 1, **gekennzeichnet dadurch, dass** nach dem Schritt "die Drehzahl des Außenlüfters (7) um den vorgegebenen Drehzahlkorrekturmengenzu erhöhen", die Methode zur Drehzahlsteuerung weiterhin umfasst:
das Feststellen, ob die Drehzahl des Außenlüfters (7) größer als seine maximale Drehzahl ist; und
wenn ja, den Außenlüfter (7) auf der maximalen Drehzahl laufen zu lassen.

3. Die Methode zur Steuerung der Drehzahl des Außenlüfters (7) des Klimageräts nach Anspruch 1, **gekennzeichnet dadurch, dass** nach dem Schritt "die Drehzahl des Außenlüfters (7) um den vorgegebenen Drehzahlkorrekturmengenzu verringern", die Methode zur Drehzahlsteuerung weiterhin umfasst:
das Feststellen, ob die Drehzahl des Außenlüfters (7) kleiner als seine minimale Drehzahl ist; und
wenn ja, den Außenlüfter (7) auf der minimalen Drehzahl laufen zu lassen.

4. Die Methode zur Steuerung der Drehzahl des Außenlüfters (7) des Klimageräts nach Anspruch 1, **gekennzeichnet dadurch, dass** vor dem Start des Außenlüfters (7), die Methode zur Drehzahlsteuerung weiterhin umfasst:
das Bestimmen einer Initialdrehrate des Außenlüfters (7) basierend auf der außentemperatur; und
den Außenlüfter (7) basierend auf der Initialdrehrate zu starten.

5. Die Methode zur Steuerung der Drehzahl des Außenlüfters (7) des Klimageräts nach Anspruch 1, **gekennzeichnet dadurch, dass** vor dem Start des Außenlüfters (7), die Methode zur Drehzahlsteuerung weiterhin umfasst:
das Erhalten der innentemperatur;
das Berechnen der Differenz zwischen der innentemperatur und einer vorgegebenen Temperatur; und
wenn die Differenz eine vorgegebene Bedingung erfüllt, dann den Außenlüfter (7) zu starten.

6. Die Methode zur Steuerung der Drehzahl des Außenlüfters (7) des Klimageräts nach Anspruch 1, **gekennzeichnet dadurch, dass** die Drehzahlkorrekturmengegrößer als ein Drehzahlfehler des Außenlüfters (7) ist.

## Revendications

1. Une méthode de contrôle de la vitesse de rotation d'un ventilateur extérieur (7) d'une climatisation, l'échangeur thermique extérieur (3) de la climatisation étant équipé du ventilateur extérieur (7), et la méthode de contrôle de la vitesse de rotation comprenant :
a) obtenir (S100) la température du coil de l'échangeur thermique extérieur (3) après le démarrage du ventilateur extérieur (7) ;
b) comparer (S200) la température du coil avec un seuil de température prédéfini ; et
c) contrôler sélectivement (S300) la vitesse de rotation du ventilateur extérieur (7) pour l'augmenter ou la diminuer d'une quantité de régulation de la vitesse de rotation, en fonction du résultat de la comparaison ;
dans lequel le seuil de température prédéfini est déterminé en fonction de la température extérieure ambiante,
**caractérisée en ce que** lorsque la climatisation fonctionne en mode refroidissement, il y a une correspondance entre la température du coil et la température de saturation correspondant à la pression élevée de la climatisation, le seuil de température prédéfini est un seuil de température élevée prédéfini, et l'étape de "contrôler sélectivement la vitesse de rotation du ventilateur extérieur (7) pour l'augmenter ou la diminuer d'une quantité de régulation de la vitesse de rotation, en fonction du résultat de la comparaison" comprend en outre :
si la température du coil est supérieure au seuil de température élevée prédéfini, alors contrôler la vitesse de rotation du ventilateur extérieur (7) pour l'augmenter de la quantité de régulation de la vitesse de rotation ; et
si la température du coil est inférieure au seuil de température élevée prédéfini, alors contrôler la vitesse de rotation du ventilateur extérieur (7) pour la diminuer de la quantité de régulation de la vitesse de rotation,
de sorte que la méthode comprend également:
obtenir la température de la sortie du compresseur de la climatisation ;
calculer le degré de surchauffe de la sortie du compresseur en fonction de la température de la sortie et du seuil de température élevée prédéfini ;
déterminer lequel des deux (le degré de surchauffe de la sortie ou le seuil de degré de surchauffe de la sortie) est le plus grand ; et
ajuster le seuil de température élevée prédéfini en fonction du résultat de cette détermination.
Ou :
lorsque la climatisation fonctionne en mode chauffage, il y a une correspondance entre la température du coil et la température de saturation correspondant à la pression basse de la climatisation, le seuil de température prédéfini est un seuil de température basse prédéfini, et l'étape de "contrôler sélectivement la vitesse de rotation du ventilateur extérieur (7) pour l'augmenter ou la diminuer d'une quantité de régulation de la vitesse de rotation, en fonction du résultat de la comparaison" comprend en outre :
si la température du coil est inférieure au seuil de température basse prédéfini, alors contrôler la vitesse de rotation du ventilateur extérieur (7) pour l'augmenter de la quantité de régulation de la vitesse de rotation ; et
si la température du coil est supérieure au seuil de température basse prédéfini, alors contrôler la vitesse de rotation du ventilateur extérieur (7) pour la diminuer de la quantité de régulation de la vitesse de rotation,
de sorte que la méthode comprend également :
obtenir la température d'aspiration du compresseur de la climatisation ;
calculer le degré de surchauffe d'aspiration du compresseur en fonction de la température d'aspiration et du seuil de température basse prédéfini ;
déterminer lequel des deux (le degré de surchauffe d'aspiration ou le seuil de degré de surchauffe d'aspiration) est le plus grand ; et
ajuster le seuil de température basse prédéfini en fonction du résultat de cette détermination.

2. La méthode de contrôle de la vitesse de rotation du ventilateur extérieur (7) de la climatisation selon la revendication 1, **caractérisée en ce que** après l'étape de "contrôler la vitesse de rotation du ventilateur extérieur (7) pour l'augmenter de la quantité de régulation de la vitesse de rotation", la méthode de contrôle de la vitesse de rotation comprend en outre :
déterminer si la vitesse de rotation du ventilateur extérieur (7) est supérieure à sa vitesse de rotation maximale ; et
si oui, faire fonctionner le ventilateur extérieur (7) à sa vitesse de rotation maximale.

3. La méthode de contrôle de la vitesse de rotation du ventilateur extérieur (7) de la climatisation selon la revendication 1, **caractérisée en ce que** après l'étape de "contrôler la vitesse de rotation du ventilateur extérieur (7) pour la diminuer de la quantité de régulation de la vitesse de rotation", la méthode de contrôle de la vitesse de rotation comprend en outre :
déterminer si la vitesse de rotation du ventilateur extérieur (7) est inférieure à sa vitesse de rotation minimale ; et
si oui, faire fonctionner le ventilateur extérieur (7) à sa vitesse de rotation minimale.

4. La méthode de contrôle de la vitesse de rotation du ventilateur extérieur (7) de la climatisation selon la revendication 1, **caractérisée en ce que** avant le démarrage du ventilateur extérieur (7), la méthode de contrôle de la vitesse de rotation comprend en outre :
déterminer une vitesse de rotation initiale du ventilateur extérieur (7) en fonction de la température extérieure ambiante ; et
faire démarrer le ventilateur extérieur (7) en fonction de cette vitesse de rotation initiale.

5. La méthode de contrôle de la vitesse de rotation du ventilateur extérieur (7) de la climatisation selon la revendication 1, **caractérisée en ce que** avant le démarrage du ventilateur extérieur (7), la méthode de contrôle de la vitesse de rotation comprend en outre :
obtenir la température ambiante intérieure ;
calculer la différence entre la température ambiante intérieure et une température de réglage ; et
si cette différence satisfait une condition prédéfinie, alors faire démarrer le ventilateur extérieur (7).

6. La méthode de contrôle de la vitesse de rotation du ventilateur extérieur (7) de la climatisation selon la revendication 1, **caractérisée en ce que** la quantité de régulation de la vitesse de rotation est supérieure à l'erreur de vitesse de rotation du ventilateur extérieur (7).
